(19) Europäisches Patentamt
European Patent Office
Office européen des brevets

(11) EP 2 218 881 A1

(12) **EUROPÄISCHE PATENTANMELDUNG**

(43) Veröffentlichungstag:
18.08.2010 Patentblatt 2010/33

(21) Anmeldenummer: 09002058.7

(22) Anmeldetag: 13.02.2009

(51) Int Cl.:
*F01D 21/00* (2006.01)       *G01B 7/14* (2006.01)
*G01B 21/16* (2006.01)

(84) Benannte Vertragsstaaten:
AT BE BG CH CY CZ DE DK EE ES FI FR GB GR
HR HU IE IS IT LI LT LU LV MC MK MT NL NO PL
PT RO SE SI SK TR
Benannte Erstreckungsstaaten:
AL BA RS

(71) Anmelder: **Siemens Aktiengesellschaft**
**80333 München (DE)**

(72) Erfinder:
• **Büscher, Carsten**
  **40882 Rattingen (DE)**
• **Tidona, Fausto**
  **40699 Erkath (DE)**

(54) **Verfahren zur Online-Kalibrierung eines Sensors sowie Messsystem**

(57) Die Erfindung betrifft ein Verfahren zur Online-Kalibrierung eines Sensors (6), der zur Messung eines Abstands (5) zu einer Prüffläche (1) ausgebildet ist, wobei ein Teilbereich (7) der Prüffläche (1) derart ausgebildet wird, dass bewusst eine geometrische Störung auf der Oberfläche des Prüfkörpers angeordnet wird, um dadurch ein Referenzsignal zu erhalten, mit dem der Sensor kalibriert werden kann.

## FIG 1

**Beschreibung**

Die Erfindung betrifft ein Verfahren zur Online-Kalibrierung eines Sensors, der zur Messung eines Abstandes zu einer Prüffläche ausgebildet ist sowie ein Messsystem zur Kalibrierung eines Sensors, umfassend einen Sensor und eine zur prüfenden Prüffläche.

Das Verfahren und das Messsystem beziehen sich insbesondere zur Anwendung bei der Radialspaltmessung in einer Turbine. Turbinen werden in vielen Bereichen zum Antrieb von Generatoren oder von Arbeitsmaschinen eingesetzt. Der Energieinhalt eines Strömungsmediums, beispielsweise eines durch Verbrennung eines Brennstoffs erzeugten Brenngases, wie bei der Gasturbine oder bei der Verwendung eines Dampfes, wie bei einer Dampfturbine, wird zur Erzeugung einer Rotationsbewegung einer Turbinenwelle genutzt. Zur Erzeugung der Rotationsbewegung der Turbinenwelle sind dabei an dieser eine Anzahl von üblicherweise in Schaufelgruppen oder Schaufelreihen zusammengefasste Laufschaufeln angeordnet, die über einen Impulsübertrag aus dem Strömungsmedium die Turbinenwelle antreiben. Zwischen benachbarten Laufschaufelreihen sind mit dem Turbinengehäuse verbundene Leitschaufelreihen angeordnet um das Strömungsmedium in der Turbineneinheit zu führen. Beim Betrieb einer derartigen Turbine ist eine zuverlässige Überwachung des sogenannten Radialspaltes von Bedeutung. Der Radialspalt ist beispielsweise der Abstand zwischen dem freien Ende einer Laufschaufel und dem Innengehäuse der Turbine.

Zur Erzielung eines besonders hohen Wirkungsgrades der Turbine ist es ein Auslegungsziel, den Radialspalt so klein wie möglich zu halten. Dadurch wird das in der Turbine geführte Strömungsmedium unter Energieumsetzung durch die Laufschaufelreihen hindurch geführt und nicht ohne Energieübertragung durch den Radialspalt an der Laufschaufel vorbeiströmen. Es ist allerdings andererseits erforderlich, einen direkten Kontakt der Laufschaufelspitze mit dem Innengehäuse der Gasturbine oder Dampfturbine aus Gründen der Betriebssicherheit in jedem Fall zwingend auszuschließen. In Dampf- oder Gasturbinen wird daher regelmäßig oder zumindest stichprobenartig der Radialspalt gemessen und überprüft. Diese Messung erfolgt mit Abstandssensoren. Allerdings können Abstandssensoren durch Temperatureinflüsse, ungenaue Einbaubedingungen, Verschleiß oder andere zeitliche Änderungen ihr Signal verändern. Dadurch können die Genauigkeit einer Messung vermindert werden, was bis zur völligen Unbrauchbarkeit solch einer Messung führen kann.

Solchen physikalisch begründeten zeitlichen Änderungen des Signals wird durch eine erneute Kalibrierung Abhilfe geschaffen. Üblicher Weise muss hierfür der Sensor ausgebaut werden und außerhalb des zu prüfenden Radialspaltes kalibriert und anschließend wieder eingebaut. Unter anderem verändern Temperatureinflüsse das von dem Sensor ermittelte Signal. Das bedeutet, dass das Signal während des Betriebs geändert werden kann. Diese Temperatureinflüsse müssen während der Kalibrierung berücksichtigt werden, was dadurch geschieht, dass in Laborversuchen Kalibrierkurven abhängig von der Temperatur ermittelt werden und später im eingebauten Zustand durch Temperaturmessungen und Vergleich mit den Kalibrierkurven berücksichtigt werden. Dadurch ist die Genauigkeit einer Messung von der präzisen Ermittlung der Kalibrierkurven im Laborversuch abhängig.

Wünschenswert wäre es ein Verfahren und ein Messsystem zu haben, bei dem ein Sensor kalibriert werden kann ohne den Sensors ausbauen zu müssen.

Eine Aufgabe der Erfindung ist es daher, ein Verfahren und ein Messsystem zur Online-Kalibrierung anzubieten, bei dem der Sensor nicht ausgebaut werden muss.

Gelöst wird diese Aufgabe durch ein Verfahren zur Online-Kalibrierung eines Sensors, der zur Messung eines Abstandes zu einer Prüffläche ausgebildet ist, wobei ein Teilbereich der Prüffläche bewusst verändert wird und der Sensor ein Referenzsignal zum Teilbereich der Prüffläche ermittelt, wobei der Sensor mit Hilfe des Referenzsignals kalibriert wird.

Die auf das Messsystem hin gerichtete Aufgabe wird gelöst durch ein Messsystem zur Kalibrierung eines Sensors, umfassend einen Sensor und einer zu prüfenden Prüffläche, wobei ein Teilbereich der Prüffläche verändert ist.

Mit der Erfindung wird somit vorgeschlagen, bewusst eine geometrische Störung der zu prüfenden Fläche einzuarbeiten. Dadurch wird die Messgröße selbst modifiziert. Ein Vergleich der Messung an der ungestörten Prüffläche mit einer Messung im Bereich der gestörten Fläche wird dazu genutzt, um den Sensor zu kalibrieren. Die Messungen im Bereich der geometrischen Störung werden als Referenzwerte genommen, mit deren Hilfe der Sensor nunmehr kalibriert werden kann, ohne ausgebaut zu werden.

Im Sinne der Erfindung wird die Geometrie der Prüffläche bewusst verändert, wobei die Änderung vorher definiert wird und exakt vermessen wird, damit ein brauchbares Referenzsignal für die Online-Kalibrierung zur Verfügung steht.

Vorteilhafte Weiterbildungen sind in den Unteransprüchen angegeben.

Die Genauigkeit der Kalibrierung hängt zwingend von der Geometrie des Teilbereichs der Prüffläche ab, die erfindungsgemäß verändert wird. In einer ersten Ausführungsform ist die Prüffläche konzentrisch ausgebildet. Das bedeutet, dass der Teilbereich der Prüffläche als eine im Wesentlichen konzentrische Fläche gegenüber der Prüffläche ausgebildet. Die Prüffläche ist rotationssymmetrisch um eine Rotationsachse ausgebildet. Eine konzentrische Störung ist in einem definierten Winkelbereich ebenfalls rotationssymmetrisch ausgebildet. Allerdings mit einem geringeren Radius als der Radius der ungestörten zu prüfenden Prüffläche. Der Radius des Teilbereiches der Prüffläche kann allerdings auch größer sein als der Radius der zu prüfenden Prüffläche. Durch die einfache Geometrie der konzentrischen Ausbildung des Teilbereichs der Prüffläche sind im Wesentlichen keine umfangreiche Berechnungen für die Auswertung nötig, da der Übergang von der Prüffläche zum Teilbereich der gestörten Prüffläche sprungartig erfolgt. Das bedeutet, dass der Sensor einen genau definierten Abstand zur Oberfläche des Teilbereichs der Prüffläche misst, der vorher genau geometrisch gemessen wurde, um dadurch den Sensor kalibrieren zu können. Der einfache Radienunterschied, d.h. der Unterschied zwischen dem Radius des Teilbereichs der Prüffläche und dem Radius der Prüffläche an sich, entspricht dem messbaren Spaltunterschied. Darüber hinaus ist solch eine konzentrische Fläche vergleichsweise einfach zu fertigen.

In einer weiteren vorteilhaften Weiterbildung ist der Teilbereich der Prüffläche als eine sekantenartige Fläche ausgebildet. Gegenüber der konzentrischen Fläche ist hier eine Berechnung des Abstandes des ortsfest fixierten Sensorsignals erforderlich. Der Abstand des Sensors zur sekantenartig ausgeführten Prüffläche ist vom Winkel abhängig, d.h. eine Drehung der Prüffläche führt zu einer Vergrößerung des Sensorsignals. Diese Vergrößerung des Sensorsignals muss mit Hilfe einer Berechnung berücksichtigt werden. Die Kalibrierung erfolgt unter Berücksichtigung dieser Berechnung. Ein Vorteil der sekantenartigen Störung ist, dass die Prüffläche einfach hergestellt werden kann. Darüber hinaus wird die Oberfläche des zu prüfenden Körpers kaum geändert in dem Sinne, dass störende Kerbwirkungen zu einer möglichen Rissgefahr führen.

In einer weiteren vorteilhaften Weiterbildung ist der Teilbereich der Prüffläche kreisförmig ausgebildet. Auch hier ist eine Auswertung erforderlich, da der Abstand zwischen dem Sensor und dem Teilbereich der Prüffläche sich in Abhängigkeit von Winkel der Prüffläche verändert.

Ein Ausführungsbeispiel der Erfindung wird anhand einer Zeichnung näher erläutert. Darin zeigen:

Figur 1    eine konzentrisch Veränderung der Prüffläche;
Figur 2    eine sekantenartige Veränderung der Prüffläche;
Figur 3    eine kreisförmige Veränderung der Prüffläche;
Figur 4    eine beliebige Veränderung der Prüffläche.

Gleiche Teile sind in allen Figuren mit denselben Bezugszeichen versehen.

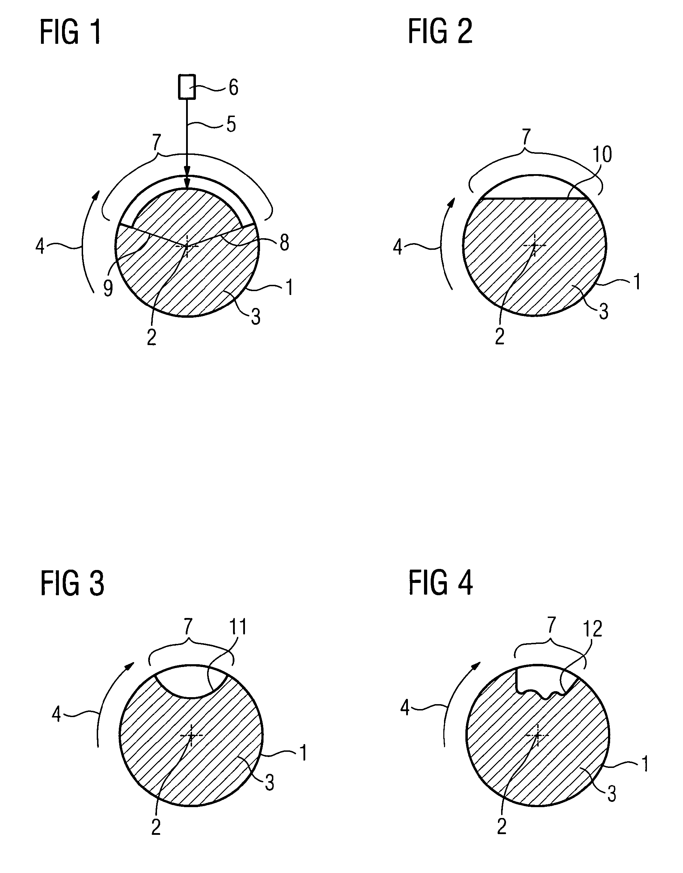

In Figur 1 ist eine Prüffläche 1 dargestellt. Die Prüffläche 1 ist im Wesentlichen rotationssymmetrisch um eine Rotationsachse 2 ausgebildet. Die Prüffläche 1 ist Bestandteil eines Prüfkörpers 3, der um die Rotationsachse in einer Richtung 4 rotiert. Zur Messung eines Radialspaltes 5 wird ein Sensor 6 verwendet. Der Sensor 6 ist lediglich in der Figur 1 eingezeichnet. Der Übersichtlichkeit wegen ist in den Figuren 2, 3 und 4 der Sensor 6 jeweils nicht eingezeichnet. Der Sensor 6 kann beispielsweise in einem Gehäuse fest angeordnet werden. In Dampfturbinen herrschen im Bereich des Sensors 6 zum Teil Temperaturen von 630°C. Der Sensor 6 muss daher geeignet ausgebildet sein.

Im Betrieb wird der Radialspalt 5 zur Prüffläche 1 gemessen. Nach einem längeren Betrieb kann es nötig sein, den Sensor 6 zu kalibrieren. Dazu wird, wie in Figur 1 dargestellt, ein Teilbereich der Prüffläche 7 ausgewählt und dessen Geometrie gegenüber der Geometrie der Prüffläche 1 verändert. Die Veränderung gemäß Figur 1 entspricht einer konzentrischen Änderung. Man spricht auch hier von einer konzentrischen Störung. Das bedeutet, dass der Teilbereich 7 an einer Sprungstelle 8 einen geringeren Radius aufweist als der Radius der Prüffläche 1. Die konzentrische Störung wird in einem definierten Winkelbereich 9 ausgeführt. Mit der Messung des Abstandes zum Teilbereich 7 wird der Sensor 6 kalibriert. Die Messgröße ist durch die exakte Vermessung des Teilbereiches 7 sehr präzise und führt daher zu einer guten Kalibrierung des Sensors 6.

In der Figur 2 ist eine sekantenartige Störung 10 dargestellt. Gefertigt wird die sekantenartige Störung 10 durch eine Fräsung tangential zur Prüffläche 1. Durch diese Geometrie ändert sich das Signal, dass vom Sensor 6 zum Teilbereich der Prüffläche 7 gelangt. Daher muss der Abstand des Sensors zur sekantenartigen Störung entsprechend berechnet werden. Es gilt hierbei:

$$\rho = 1 - \frac{X}{\cos(\varphi)} \ .$$

Hierbei bedeuten $r_0$ = normaler Wellenradius, $r$ = lokaler Radius, $r_{min}$ = kleinster Radius, $\alpha$ = Eingriffswinkel, p = relative Spaltänderung. Des Weiteren gelten:

$$\alpha = 2\arccos(\mathrm{X})\,,$$

$$\mathrm{X} := \left(\frac{r_{\min}}{r_0}\right),$$

$$\rho := 1 - \left(\frac{r}{r_0}\right).$$

Unter Berücksichtigung dieser mathematischen Gleichungen wird der Sensor 6 mit der sekantenartigen Störung der Prüffläche 1 kalibriert.

In der Figur 3 ist eine kreisförmige Störung 11 dargestellt. Diese kreisförmige Störung 11 weist einen in der Figur 3 nicht näher dargestellten Radius auf, damit die Geometrie der kreisförmigen Störung 11 berechenbar ist. Die Geometrie der kreisförmigen Störung 11 wird anhand folgender Gleichungen ermittelt. Es gelten:

$$\varepsilon = \chi + \kappa\,,$$

$$\alpha = 2\arccos\left(\frac{\varepsilon^2 + 1 - \kappa^2}{2\varepsilon}\right),$$

$$\rho = 1 - \left\{\varepsilon\cos(\varphi) - \sqrt{\varepsilon^2\left[\cos^2(\varphi) - 1\right] + \kappa^2}\right\}.$$

Dabei bedeuten $r_0$ = normaler Wellenradius, r = lokaler Radius, $r_{\min}$ = kleinster Radius, $r_k$ = Einschnittsradius, $\alpha$ = Eingriffswinkel, a = Abstand der Mittelpunkte, p = relative Spaltänderung.

Es gelten weiterhin:

$$\chi := \left(\frac{r_{\min}}{r_0}\right),$$

$$\kappa := \left(\frac{r_k}{r_0}\right),$$

$$\rho := 1 - \left(\frac{r}{r_0}\right),$$

$$\varepsilon = \left( \frac{\alpha}{r_0} \right).$$

Somit wird die Geometrie der kreisförmigen Störung 11 exakt berechnet und der Sensor 6 mit Hilfe dieser geometrischen Berechnungen kalibriert.

In der Figur 4 ist eine beliebige Störung der Prüffläche dargestellt. Es ist einleuchtend, dass eine solch beliebige Störung, d.h. eine beliebige Geometrie des Teilbereiches 7 schwer geometrische anhand von Formeln zu berechnen ist. Eine Kalibrierung des Sensors 6 mit Hilfe einer beliebigen Störung ist daher umfangreich und kompliziert.

Der Sensor 6 ist als ein optischer Sensor ausgebildet, der besonders in hohen Umgebungstemperaturen eine akzeptable Funktionstüchtigkeit zeigt.

**Patentansprüche**

1. Verfahren zur Online-Kalibrierung eines Sensors (6), der zur Messung eines Abstands (5) zu einer Prüffläche (1) ausgebildet ist,
   wobei ein Teilbereich (7) der Prüffläche (1) verändert wird und der Sensor (6) ein Referenzsignal zum Teilbereich (7) der Prüffläche (1) ermittelt,
   wobei der Sensor (6) mit Hilfe des Referenzsignals kalibriert wird.

2. Verfahren nach Anspruch 1,
   wobei als Referenzsignal der Abstand des Teilbereichs (7) der Prüffläche (1) zum Sensor (6) ermittelt wird.

3. Verfahren nach Anspruch 1 oder 2,
   wobei der Teilbereich (7) der Prüffläche (1) derart verändert wird, dass eine definierte Geometrie entsteht.

4. Verfahren nach einem der vorhergehenden Ansprüche,
   wobei die Prüffläche (1) kreisförmig ausgebildet wird.

5. Verfahren nach Anspruch 4,
   wobei der Teilbereich (7) der Prüffläche (1) als eine im Wesentlichen konzentrische Fläche gegenüber der Prüffläche (1) ausgebildet wird.

6. Verfahren nach Anspruch 4,
   wobei der Teilbereich (7) der Prüffläche (1) als eine sekantenartige Fläche ausgebildet wird.

7. Verfahren nach Anspruch 4,
   wobei der Teilbereich (7) der Prüffläche (1) als eine kreisförmige Fläche ausgebildet wird.

8. Messsystem zur Kalibrierung eines Sensors (6),
   umfassend einen Sensor (6) und eine zu prüfende Prüffläche (1),
   wobei ein Teilbereich der Prüffläche(1) verändert ist.

9. Messsystem nach Anspruch 8,
   wobei der Sensor (6) zur Ermittlung des Abstandes (5) zur Prüffläche (1) ausgebildet ist.

10. Messsystem nach Anspruch 8 oder 9,
    wobei das Messsystem derart ausgebildet ist, dass ein Referenzsignal erzeugbar ist, wodurch der Abstand zum Teilbereich der Prüffläche (1) ermittelbar ist und der Sensor (6) mit dem Referenzsignal kalibrierbar ist.

11. Messsystem nach einem der Ansprüche 8 bis 10,
    wobei die Prüffläche (1) im Wesentlichen kreisförmig ist.

12. Messsystem nach Anspruch 11,
    wobei der Teilbereich (7) der Prüffläche (1) eine gegenüber der Prüffläche (1) konzentrische Fläche aufweist.

**13.** Messsystem nach Anspruch 11,
wobei der Teilbereich (7) der Prüffläche (1) eine gegenüber der Prüffläche (1) sekantenartige Fläche aufweist.

**14.** Messsystem nach Anspruch 11,
wobei der Teilbereich (7) der Prüffläche (1) eine gegenüber der Prüffläche (1) kreisförmige Fläche aufweist.

FIG 1

FIG 2

FIG 3

FIG 4

**Europäisches Patentamt**
**European Patent Office**
**Office européen des brevets**

# EUROPÄISCHER RECHERCHENBERICHT

**Nummer der Anmeldung**

EP 09 00 2058

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2007/005294 A1 (ANDARAWIS EMAD A [US] ET AL ANDARAWIS EMAD ANDARAWIS [US] ET AL) 4. Januar 2007 (2007-01-04) * Zusammenfassung * * Absatz [0029] - Absatz [0046] * * Abbildungen 4,7-11 * ----- | 1-14 | INV. F01D21/00 G01B7/14 G01B21/16 |
| X | US 4 987 555 A (TWERDOCHLIB MICHAEL [US]) 22. Januar 1991 (1991-01-22) * Zusammenfassung * * Spalte 3, Zeile 6 - Spalte 4, Zeile 59 * * Abbildungen 1-5 * ----- | 1-14 | |
| A | WO 2005/073667 A (SIEMENS CORP RES INC [US]; GENC YAKUP [US]; ZHANG XIANG [US]) 11. August 2005 (2005-08-11) * Zusammenfassung * * Absatz [0007] - Absatz [0022] * * Abbildungen 3-7 * ----- | 1-14 | |

| RECHERCHIERTE SACHGEBIETE (IPC) |
|---|
| G01B F01D |

Der vorliegende Recherchenbericht wurde für alle Patentansprüche erstellt

| Recherchenort | Abschlußdatum der Recherche | Prüfer |
|---|---|---|
| München | 27. April 2009 | Kokkonen, Jukka |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 00 2058

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-04-2009

| Im Recherchenbericht angeführtes Patentdokument | Datum der Veröffentlichung | Mitglied(er) der Patentfamilie | Datum der Veröffentlichung |
|---|---|---|---|
| US 2007005294 A1 | 04-01-2007 | CN 1892172 A<br>EP 1739387 A1<br>JP 2007010656 A | 10-01-2007<br>03-01-2007<br>18-01-2007 |
| US 4987555 A | 22-01-1991 | CA 2003723 A1<br>CN 1043186 A<br>ES 2018432 A6<br>IT 1236791 B | 31-05-1990<br>20-06-1990<br>01-04-1991<br>02-04-1993 |
| WO 2005073667 A | 11-08-2005 | KEINE | |

EPO FORM P0461

Für nähere Einzelheiten zu diesem Anhang : siehe Amtsblatt des Europäischen Patentamts, Nr.12/82